# EUROPEAN PATENT SPECIFICATION

(11) **EP 2 950 643 B1**
(45) Date of publication and mention of the grant of the patent: **15.08.2018**
(21) Application number: 14703931.7
(22) Date of filing: 03.02.2014
(51) Int. Cl.: A01N 1/02

(54) **COMPOSITION AND METHOD FOR PRESERVING, TRANSPORTING AND STORING LIVING BIOLOGICAL MATERIALS**
ZUSAMMENSETZUNG UND VERFAHREN ZUM KONSERVIEREN, TRANSPORTIEREN UND LAGERN LEBENDER BIOLOGISCHER MATERIALIEN
COMPOSITION ET PROCÉDÉ POUR CONSERVER, TRANSPORTER ET STOCKER DES MATIÈRES BIOLOGIQUES VIVANTES

(30) Priority: 01.02.2013 NL 2010225
(43) Date of publication of application: 09.12.2015
(73) Proprietor: Gho, Conradus Ghosal, 6241 JL Bunde (NL)
(72) Inventor: Gho, Conradus Ghosal, 6241 JL Bunde (NL)
(74) Representative: EP&C
(86) International application number: PCT/NL2014/050063
(87) International publication number: WO 2014/120014

(56) References cited:
- EP-A1- 2 143 439
- EP-A1- 2 502 989
- WO-A1-01/45716
- WO-A1-98/47471
- WO-A1-2012/152717
- WO-A2-2004/018655
- US-A1- 2005 265 980
- US-B1- 6 974 681
- MOHAMED MOALIN ET AL: "A Planar Conformation and the Hydroxyl Groups in the B and C Rings Play a Pivotal Role in the Antioxidant Capacity of Quercetin and Quercetin Derivatives", MOLECULES, vol. 16, no. 12, 21 November 2011 (2011-11-21), pages 9636-9650, XP055083593, DOI: 10.3390/molecules16119636
- THURID AHLENSTIEL ET AL: "Improved Cold Preservation of Kidney Tubular Cells by Means of Adding Bioflavonoids to Organ Preservation Solutions", TRANSPLANTATION, vol. 81, no. 2, 27 January 2006 (2006-01-27), pages 231-239, XP055083603, ISSN: 0041-1337, DOI: 10.1097/01.tp.0000191945.09524.a1
- Ana M Cortizo ET AL: "Proliferative and morphological changes induced by vanadium compounds on Swiss 3T3 fibroblasts", BioMetals, vol. 10, 1 January 1997 (1997-01-01), pages 127-133, XP055318405,
- S. B. Etcheverry ET AL: "Vanadium Bioactivity on Cells in Culture" In: "Vanadium Compounds", 10 December 1998 (1998-12-10), American Chemical Society, Washington, DC, XP055318410, ISBN: 978-0-8412-1693-8 vol. 711, pages 270-276, DOI: 10.1021/bk-1998-0711.ch021,
- CHUN HUA DAI ET AL: "Vanadate mimics the effect of stem cell factor on highly purified human erythroid burst-forming units in vitro, but not the effect of erythropoietin", EXPERIMENTAL HEMATOLOGY, ELSEVIER INC, US, vol. 20, 1 January 1992 (1992-01-01), pages 1055-1060, XP002272952, ISSN: 0301-472X
- RIJKSEN G ET AL: "The role of protein tyrosine phosphatases in density-dependent growth control of normal rat kidney cells", FEBS LETTERS, ELSEVIER, AMSTERDAM, NL, vol. 322, no. 1, 3 May 1993 (1993-05-03), pages 83-87, XP027550471, ISSN: 0014-5793 [retrieved on 1993-05-03]
- RYUTO M ET AL: "All-trans-retinoic acid-dependent inhibition of E-cadherin-based cell adhesion with concomitant dephosphorylation of beta-catenin in metastatic human renal carcinoma cells", JAPANESE JOURNAL OF CANCER RESEARCH, JAPANESE CANCER ASSOCIATION, TOKYO, JP, vol. 88, no. 10, 1 October 1997 (1997-10-01), pages 982-991, XP008168564, ISSN: 0910-5050, DOI: 10.1111/J.1349-7006.1997.TB00319.X [retrieved on 2005-08-24]

## Description

### Field of the invention

The present invention is in the field of living tissue biopreservation technology. Specifically, the present invention provides an improved composition and a method for preserving keratinocyte cells and/or hair follicular cells using the composition of the invention. The improved composition and method of the present invention are particularly efficient at minimizing loss of biological activity and physical integrity of living biological materials, especially in the context where living biomaterials are preserved at temperatures above freezing point. The improved compositions and method of the present invention are particularly suitable for use in the preservation, transportation, and/or storage of keratinocyte cells and/or hair follicular cells. The improved compositions and method of the present invention are also suitable for use in transplantation of biological materials in a subject in need of thereof, especially for transplantation of autologous or allogeneic biological materials.

### Background of the invention

The emergence of new technologies such as tissue engineering, tissue transplantation technology, regenerative medicine, and cosmetic procedures for face and body rejuvenation, which rely heavily on the use of living biological materials such as natural and bioengineered living cell-based and/or tissue-based products, has created a need for compositions and methods for preserving natural and bioengineered living biological materials. Compositions and methods for preserving biological materials are not only critical for preserving the functional and physical integrity of both natural and engineered (living) biological materials, but are also important for transportation and storage (extended shelf life) of such biological materials.

Biopreservation technologies are based on two main approaches, i.e. cryopreservation method (temperatures below freezing point) and hypothermic methods (temperatures above freezing point). Cryopreservation methods are typically required for long-term storage. However, because of the damage caused by ice formation in structured tissues due to freezing upon thawing, cryopreservation methods can be problematic due to the limited capacity of living cells and/or tissue to sustain such damage.

Hypothermic methods are commonly employed for temporary preservation, transportation and/or storage of many types of cell/tissue between donation sites, bioengineering sites, processing laboratories, cell/tissue banks, and end users. In the hypothermic method, biological material is typically stored in an aqueous, saline-based composition, which commonly consists of isotonic saline, which can be modified by the addition of various additives, including sodium, potassium, calcium, magnesium, chloride, phosphate and bicarbonate, glucose, lactose, amino acids, vitamins, anti-platelet aggregation/vasoactive agents, calmodulin inhibitors, calcium channel blockers, protease and phospholipase inhibitors, anti-oxidants/free radical scavengers, iron chelators, membrane stabilizers, cytoprotective agents, anti-apoptotic agents, metabolic substrates, sugars, nucleotide precursors (hep enhancers), oxygen-carriers, trophic factors, and other compounds, in various concentrations.

However, the use of conventional compositions for the preservation, transportation and/or storage of living biological materials is limited since living biological materials can only be successfully preserved for a relatively short period of time before cell and/or tissue degeneration (i.e. by necrosis and/or apoptosis) begins. Furthermore, another main pitfall associated with the compositions employed in commonly used hypothermic methods is that such compositions are designed to maintain cellular function at normal physiological temperatures (i.e. ∼37°C), but not at reduced temperatures (i.e. above the freezing point but below ∼37°C). Therefore, the existing compositions are less than optimal for the preservation, transportation and/or storage of biological materials at reduced temperatures (i.e. above the freezing point but below ∼37°C). Therefore, there is a need in the art for improved compositions and methods for preserving living biological materials that lacks these limitations.

Additionally, compositions for preservation, transportation and/or storage generally comprise Foetal Bovine Serum. Serum is a major source of viral contaminants which, once present, are difficult to remove from cultures. It can contain viruses, prions and mycoplasma, which may skew the outcome of scientific experiments and may transfer diseases to cultured cell. Additionally, considerable ethical debate surrounds the production of Foetal Bovine Serum. In the art there is a need for improved compositions for preservation, transportation and/or storage and methods for preserving living biological materials, which are devoid of Foetal Bovine Serum.

WO98/47471A1 discloses a method for propagating hair and provides compositions to be used in said method for culturing hair cells and provides compositions for culturing hair cells

It is a goal of the present invention to provide such improved compositions and improved methods for preserving living biological materials.

### Summary of the invention

In a first aspect, the present invention relates to a composition for the preservation, transportation and/or storage of living biological material, which comprises at least one anti-apoptotic compound, wherein said anti-apoptotic agent is a physiologically acceptable vanadium compound, at least one anti-oxidant compound, at least one stem cell enhancer compound, selected from the group consisting of erythropoietin, CD34-positive cells and retinoic acid, and at least one extracellular matrix compound.

In an embodiment, the physiologically acceptable vanadium compound is selected from the group consisting of bis (maltolato) oxovanadium, oxovanadium, and orthovanadium. In a preferred embodiment, the physiologically acceptable vanadium compound is Bis (maltolato) oxovanadium.

In an embodiment, the composition as taught herein may further comprise a second or further anti-apoptotic compounds selected from the group consisting of triiodothyronine, estradiol, progesterone, tissue extract, insulin, transferrin, selenium, L-cysteine, adenosine triphosphate-magnesium chloride, and L-leucine. In an embodiment, the tissue extract is a bovine pituitary extract.

In one embodiment, the at least one anti-oxidant compound of the composition as taught herein is selected from the group consisting of quercetin, monohydroxyethyl, rutoside, vitamin C, lipoic acid, deferoxamine mesylate, and vitamin E. In a preferred embodiment, the anti-oxidant compound is selected from the group consisting of quercetin and mono-hydroxyethyl rutoside.

In an embodiment, the stem cell enhancer compound of the composition as taught herein is selected from the group of erythropoietin, CD34-positive cell, and retinoic acid. In a preferred embodiment, the stem cell enhancer compound is selected from the group of erythropoietin and CD34-positive cell. In a more preferred embodiment, the stem cell enhancer compound is erythropoietin.

In an embodiment, the CD34-positive cell and/or erythropoietin is derived from the peripheral blood or bone marrow of a subject. In a preferred embodiment, the CD34-positive cell is obtained from a human CD34-positive cell line.

In an embodiment, the extracellular matrix compound of the composition as taught herein is selected from the group of: platelet rich plasma, laminin, collagen IV, heparin sulfate, entactin, and chondroitin sulfate. In a preferred embodiment, the extracellular matrix compound is platelet rich plasma. In a further preferred embodiment, the platelet rich plasma is derived from the peripheral blood of a subject.

In an embodiment, the composition of the present invention further comprises at least one degranulating agent. In a preferred embodiment, the degranulating agent is Compound 48/80.

In another embodiment, the composition as taught herein further comprises an inorganic salt. In a preferred embodiment, the inorganic salt is CaCl₂.

In an embodiment, the composition as taught herein further comprises a physiologically acceptable saline solution.

In another embodiment, the composition as taught herein further comprises one or more compounds selected from the group of: albumin, essential and non-essential amino acids, vitamins, trace elements, organic constituents, inorganic salts, human serum albumin, insulin, growth supplements, and antibiotics.

In an embodiment, the composition of the present invention is in a ready-to-use form or in a concentrated form.

In another embodiment, the composition of the present invention is sterile.

In an embodiment, the composition of the present invention is used for preserving, transporting and/or storing keratinocyte cells and/or hair follicular cells

In a second aspect, the present invention relates to an *in vitro* method for preserving, transporting, and/or storing keratinocyte cells and/or hair follicular cells, comprising the steps of:
(a) providing a composition as taught herein; and
(b) applying the composition to the keratinocyte cells and/or hair follicular cells.
In an embodiment said keratinocyte cells and/or hair follicular cells of step (b) of the *in vitro* method of the present invention are maintained at a temperature in the range of above 0°C and below 40°C.

In another embodiment, the composition of the present invention is replenished daily in the steps of the *vitro* method according to the present invention.

In an embodiment, the living biomaterial of step (b) of the *vitro* method of the present invention is maintained at a temperature of about below 25°C, more preferably about below 15°C.

### Detailed description of the invention

### GENERAL DEFINITION

The terms "neural cells and/or neural tissue" and "nerve cell and/or nerve tissue" as used herein refer to cell and/or tissue having origin from the main component of the two parts of the nervous system; the brain and spinal cord of the central nervous system (CNS), and the branching peripheral nerves of the peripheral nervous system (PNS). The term "nervous cell and/or tissue" is also commonly used as an equivalent to "neural cells and/or neural tissue" and "nerve cell and/or nerve tissue". In the present invention, these terms are used interchangeably.

The terms "living biological material" and "living biomaterial" are used interchangeably. The terms include both natural and bioengineered biological material, and include, e.g., cells and tissues. The living biological material may be part of an organ, or may be an entire organ, e.g., (part of) an organ derived from a donor subject. Non-limiting examples of living biological material include cells such as neural cells, eye cells such as retinal pigment epithelium cell and rods and cones, heart cells such as cardiomyocytes and pacemaker cells, tooth cell such as odontoblast and other pulp cells, epithelial cells, fat cells, blood cells, immune cells, muscle cells, skin cells, hair follicular stem cells, non-embryonic stem cells, embryonic stem cells, bone cells such as osteoblasts, osteocytes, osteoclasts, and cartilage cells such as chondrocytes. Also included within the term are, without limitations, tissues such as neural tissue, eye tissue, heart tissue, tooth tissue, epithelial tissue, connective tissue, fat tissue, muscle tissue, skin tissue, hair tissue, bone tissue, and cartilage tissue. Similarly, organs such as heart, liver, kidneys, eyes, pancreas, bladder, gall bladder, intestine, tendons, ligaments, trachea, lungs, stomach, esophagus, pituitary gland, thyroid gland, nose, ears, adrenal glands, ovaries, intestine, placenta, umbilical cord, testes, thymus, lymph nodes, spleen, blood vessels, arteries, veins, tongue, spinal cord, and bone marrow are included in the term "living biological material". The living biological material may be of any origin, but is preferably of human origin.

The term "viability" can be defined as the ability of preserved, transported and stored cells, tissues, and/or organs to perform their normal functions upon return to physiological conditions. Examples of methods for assessing cell viability within tissues or organs include amino acid uptake, protein synthesis, contractility, ribonucleic acid synthesis, 2-deoxyglucose phosphorylation, and dye uptake assay. An example of dye uptake assay is the trypan blue staining assay. The assay relies on the use of a trypan blue dye to selectively stain dead cells (also dead cells within tissue and/or organs) blue. While the trypan blue dye is readily absorbed by dead cells simply by passing through the cell membrane, the trypan blue dye is actively blocked from passing through the cell membrane of living cells. As a result, only dead cells are identified as having a distinctive blue color under a microscope while living cells are dye-free. Trypan blue staining assay is routinely used in microscopy for assessment of cell and/or tissue viability. In the context of the present invention, the absence or a decrease in Trypan blue staining is considered as a reliable indication of no cell and/or tissue death or as a reliable indication of an increase in cell and/or tissue viability, respectively.

The term anti-apoptotic compound' as used herein refers to a compound capable of preventing or reducing apoptosis. The term anti-apoptotic compound' is commonly used by the skilled person to describe compounds or substances having anti-apoptotic activity. Non-limiting examples of anti-apoptotic compounds include: physiologically acceptable vanadium compounds (e.g. bis (maltolato) oxovanadium, oxovanadium, orthovanadium), triodothyronine, estradiol, progesterone, insulin, transferrin, selenium, L-cysteine, L-leucine, adenosine triphosphate-magnesium chloride, tissue extract (e.g. bovine pituitary extract), and others.

The term anti-oxidant compound' as used herein refers to a compound capable of inhibiting or reducing the oxidation of other molecules and/or counteracting the effects of oxidative stress in a cell and/or tissue. The skilled person is well acquainted with the meaning of the term 'anti-oxidant' and recognizes it as well-known category of compounds used in various compositions or products. Non-limiting examples of anti-oxidant include: quercetin, monohydroxyethyl rutoside, vitamin C, lipoic acid, deferoxamine mesylate, vitamin E, and others.

The term 'stem-cell enhancer compound' as used herein, refers to a compound capable of enhancing the reprogramming of a stem cell or differentiation of a stem cell into a desired tissue type. Stem-cell enhancer compounds are also commonly used to promote expansion of stem cells while maintaining their genomic stability and viability under culture conditions. The skilled person is well acquainted with the term 'stem-cell enhancer compound' particularly in the context of regenerative medicine and cosmetic procedures, where stem cells are used to generate various types of tissues in vitro. Stem-cell enhancer compounds include erythropoietin, CD34-positive cells, retinoic acid. The term "CD34-positive cell" refers to a cell positive for the molecular marker CD34, which is a surface glycoprotein functioning as a cell-cell adhesion factor. CD34 may also mediate the attachment of stem cells to bone marrow extracellular matrix or directly to stromal cells. CD34 is also the name for the human gene that encodes the protein. CD34 represents a well-known marker for primitive blood- and bone marrow-derived progenitor cells, especially for hematopoietic and endothelial progenitors. CD34-positive cells may be isolated from peripheral blood or bone marrow in a subject. CD34-positive cells is one example of stem cell enhancer compound.

The terms "autologous" in the context of the present invention means "derived or transferred from the same individual's body", and may refer to organs, tissues, cells, fluids, or proteins a subject, and which are to be administered to or transplanted in (optionally, another part of the body) the same individual. Organs, tissue, cells, or proteins transplanted by such "autologous" procedure is referred to as an autograft or autotransplant.

The term "allogeneic" as used herein, refers to organs, tissues, cells, fluids or proteins taken from a donor subject, and which are to be administered to or transplanted in a recipient subject of the same species that is genetically non-identical to the donor subject. Organs, tissue, cells, fluids or proteins transplanted by such "allogeneic" procedure is referred to as an allograft or allotransplant.

The terms "physiologically acceptable saline solution", as used herein, is well-known to the person skilled in the art. It refers to a sterile saline solution of sodium chloride that is isotonic to body fluids or body cells, tissues and/or organs, used to maintain living tissue temporarily and as a solvent for parenterally administered drugs. In the present invention, a saline solution is defined as a solution of about 0.90% w/v of sodium chloride, with an osmolality of about 300 mOsm and an osmolarity of about 154 mmol of sodium and about 154 mmol of chloride, in one liter of water.

The term "isotonic solution", as used herein, refers to a solution in which its effective osmole concentration is the same as the solute concentration of another solution or another cell and/or tissue with which it is compared. This occurs, for example, when the concentration of both water and total solute molecules are the same in an external solution as in the cell content. Water molecules diffuse through the plasma membrane in both directions, and as the rate of water diffusion is the same in both direction, that cell will neither gain nor lose water. In the present invention, an isotonic composition refers to a solution wherein the concentration of both water and total solute molecules are the same in an external solution as in the cell content of the cell being preserved, transposed or stored in the composition of the present invention or as in the cell content of cells being part of a tissue and/or organ being preserved, transposed and/or stored in the composition of the present invention.

### THE COMPOSITION OF THE INVENTION

The present invention provides a composition that is suitable for use in the preservation, transportation, and/or storage of biological material. Specifically, the present inventor has found that the composition of the present invention is particularly effective at maintaining the functional and physical integrity of biological materials including cells, tissues and/or organs during preservation, transport, and/or storage of said biological materials. It was observed that the level of apoptotic and/or necrotic damage was significantly decreased in living biological materials preserved, transported and/or stored in the composition of the invention as compared to those maintained in saline solution-based compositions or in a basic growth serum medium. It was further observed that the level of viral contamination (for instance by viruses, prions and mycoplasma) was reduced in living biological materials preserved, transported and/or stored in the composition of the invention as compared to those maintained in saline solution-based compositions or in a basic growth serum medium, particularly those containing Foetal Bovine Serum (also known as Foetal Calf Serum), or any animal serum, including human serum.

Furthermore, the present inventor has also shown that the composition of the invention lengthens the time window within which living biological materials can be preserved, transported and/or stored at temperatures above the freezing point, i.e. above zero and below 37°C. Specifically, it was observed that living biological materials could be preserved, transported and/or stored in the composition of the invention for extended time periods, while sustaining minimal loss of functional and physical integrity.

In a first aspect, the present invention relates to a composition suitable for the preservation, transportation and/or storage of living biological materials, which composition comprises at least one anti-apoptotic compound, wherein said anti-apoptotic agent is a physiologically acceptable vanadium compound, at least one anti-oxidant compound, at least one stem cell enhancer compound, selected from the group consisting of erythropoietin, CD34-positive cells and retinoic acid, and at least one extracellular matrix compound. Anti-apoptotic compounds, anti-oxidant compounds, stem cell enhancer compounds, and extracellular matrix compounds *per se* are well-known in the art and are commercially available. Protocols and methods for preparing anti-apoptotic compounds, anti-oxidant compounds, stem cell enhancer compounds, and extracellular matrix compounds are also well-known in the art. Any commercially available or home-made anti-apoptotic compounds, anti-oxidant compounds, stem cell enhancer compounds, extracellular matrix compounds can be used in the preparation of the composition of the present invention.

In an embodiment, the physiologically acceptable vanadium compound is selected from the group of bis (maltolato) oxovanadium, oxovanadium, and orthovanadium. In a preferred embodiment, the physiologically acceptable vanadium compound is bis (maltolato) oxovanadium.

Any physiologically acceptable concentrations (mg/ml) of Bis (maltolato) oxovanadium can be used in the composition of the present invention. For example, the concentration of Bis (maltolato) oxovanadium may be in the range of about 0.01-100 mg/ml, more preferably about 0.1-10 mg/ml, more preferably about 0.5-8 mg/ml, more preferably about 0.6-6 mg/ml, more preferably about 0.7-3 mg/ml, about 0.8-2 mg/ml, more preferably about 0.9-1.5 mg/ml, more preferably about 1 mg/ml. The present inventor has found that the use of an anti-apoptotic compound such as a physiologically acceptable vanadium compound, especially Bis (maltolato) oxovanadium, was particularly effective as a basic anti-apoptotic compound. Specifically, it was found that the incorporation of a physiologically acceptable vanadium compound, especially Bis (maltolato) oxovanadium, into the composition of the invention enhanced the efficiency of other ingredients present in the composition, for instance growth factors.

In one embodiment, bis (maltolato) oxovanadium, oxovanadium, and orthovanadium are used interchangeably.

In an embodiment, the composition of the invention further comprises a second or further anti-apoptotic compounds selected from the group consisting of triiodothyronine, estradiol, progesterone, tissue extract, insulin, transferrin, selenium, L-cysteine, adenosine triphosphate-magnesium chloride, and L-leucine.

In an embodiment, the tissue extract is a bovine pituitary extract. Tissue extracts such as bovine pituitary extracts are well-known in the art and are commercially available. Methods and protocols for preparing tissue extract are also well-known in the art. Any commercially available or home-made tissue extract can be used to prepare the composition of the invention but bovine pituitary extract is preferred. It may be particularly advantageous to incorporate a tissue extract, particularly a bovine pituitary extract, into the composition of the invention for the purpose of preventing the cells, tissues and/or organs to undergo cellular and/or tissue differentiation during preservation, transportation and/or storage in the composition of the invention. Preventing cells, tissues, and/or organs to undergo differentiation is important in order to continuously maintain the cells, tissues and/or organs in the original state, i.e. as when originally brought in contact with the composition, throughout the preservation, transportation and/or storage phases.

In an embodiment, at least two, three, four, five, six, seven, eight, nine, ten, or more, anti-apoptotic compounds selected from the group of: a physiologically acceptable vanadium compound (e.g. bis (maltolato) oxovanadium and/or oxovanadium and/or orthovanadium), , triiodothyronine, estradiol, progesterone, tissue extract (e.g. bovine pituitary extract), insulin, transferrin, selenium, L-cysteine, adenosine triphosphate-magnesium chloride, and L-leucine, are present in the composition of the invention.

Specifically it was found by the present inventor that the incorporation of at least two, preferably three, preferably four, preferably five, preferably six, preferably seven, preferably height, preferably nine, and more preferably ten anti-apoptotic compounds, was particularly effective, i.e. improved maintenance of the functional and physiological integrity of the cells, tissues, and/or organs preserved, transported and/or stored in the composition of the invention, relative to a solution where only one anti-apoptotic compound is present.

The at least one anti-oxidant compound of the composition may be selected from the group consisting of: quercetin, monohydroxyethyl rutoside, vitamin C, lipoic acid, deferoxamine mesylate, and vitamin E. In a preferred embodiment, the anti-oxidant-compound is selected from the group consisting of quercetin and mono-hydroxyethyl rutoside, more preferably mono-hydroxyethyl rutoside. It was found by the present inventor that these compounds were particularly effective, i.e. further enhanced the functional and physical integrity of the cells, tissues and/or organs preserved, transported, and/or stored in the composition of the invention. Any physiologically acceptable concentrations (mg/ml) of mono-hydroxyethyl rutoside can be used in the composition of the present invention, such as a concentration in the range of about 0.0025-25 mg/ml, more preferably about 0.025-2.5 mg/ml, more preferably about 0.12-2 mg/ml, more preferably about 0.15-1.5 mg/ml, more preferably about 0.18-1 mg/ml, more preferably about 0.2-0.5 mg/ml, more preferably about 0.21-0.4 mg/ml, more preferably about 0.23-0.3 mg/ml, more preferably about 0.23-0.28 mg/ml, and more preferably about 0.25 mg/ml.

In an embodiment, at least two, three, or more anti-oxidant compounds selected from the group consisting of: quercetin, monohydroxyethyl rutoside, vitamin C, lipoic acid, deferoxamine mesylate, and vitamin E, are incorporated in the composition of the invention. It was found by the inventor that the presence of more than two anti-oxidant compounds, such as three anti-oxidant compounds, further improved the functional and physiological integrity of the cells, tissues, and/or organs preserved, transported and/or stored in the composition of the invention, relative to a solution where only one anti-oxidant compound is present.

In an embodiment, the at least one stem cell enhancer compound of the composition of the invention is selected from the group consisting of: erythropoietin, a CD34-positive cell, and retinoic acid.

In an embodiment, the at least one stem cell enhancer compound of the composition of the invention is selected from the group consisting of erythropoietin and CD34-positive cell.

In an embodiment, the stem cell enhancer compound is a CD34-positive cell. Any physiologically acceptable amounts (cells/ml) of CD34-positive cells can be used in the present invention but an amount in the range of about 1x10¹-1x10⁵ cells/ml, more preferably about 1x10²-1x10⁴ cells/ml, more preferably about 5x10²-1x10⁴ cells/ml, more preferably about 5x10²-0.5x10⁴ cells/ml, more preferably about 6x10²-0.4x10⁴ cells/ml, more preferably about 7x10²-0.3x10⁴ cells/ml, more preferably about 8x10²-0.2x10⁴ cells/ml, more preferably about 9x10²-0.15 x10⁴ cells/ml, more preferably about 1x10³ CD34-positive cells/ml is preferred. In an embodiment, the CD34-positive cell is obtainable or obtained from a CD34-positive cell line. CD34-positive cell lines are known in the art and are commercially available, for instance KG-1a, KG-1 and NIH3T3. In another embodiment, the CD34-positive cell is obtainable or obtained from a human CD34-positive cell line, which are also commercially available such as KG-1a, KG-1 and NIH3T3. However, in a further preferred embodiment, the CD34-positive cell is derived from the peripheral blood or from the bone marrow of a donor subject. Examples of a donor subject include a non-human mammal subject or a human subject. In a further preferred embodiment, the donor subject is a human subject. Methods for isolating and identifying CD34-positive cells from the peripheral blood or bone marrow of a donor subject are known in the art.

In a preferred embodiment, the stem cell enhancer compound is erythropoietin. Any physiologically acceptable amounts of erythropoietin can be used in the present invention but an amount of about 0.1 unit to 10 units of erythropoietin/ml is used, preferably about 0.3 unit to 8 units of erythropoietin/ml is used, preferably about 0.5 unit to 6 units of erythropoietin/ml is used, about 0.7 unit to 4 units of erythropoietin/ml is used, about 0.9 unit to 2 units of erythropoietin/ml is used, about 0.95 unit to 1.5 units of erythropoietin/ml is used, more preferably about 1 unit of erythropoietin/ml is used. In an embodiment, erythropoietin may be obtained from a commercial source. In a preferred embodiment, erythropoietin may be obtained from a donor subject, for instance from the blood circulation or from bone marrow of a donor subject. Examples of a donor subject include a non-human mammal subject or a human subject. In a further preferred embodiment, the donor subject is a human subject. Methods for obtaining erythropoietin from the peripheral blood or bone marrow are known in the art. The person skilled in the art is well acquainted with the term "Unit" (abbreviated as "U") as a measure unit for amount of erythropoietin. Erythropoietin amounts are expressed in units (U) rather than in grams or moles, because native erythropoietin and recombinant human erythropoietin are mixtures of isoforms with differing bioactivities. In the present invention, one unit is defined as the amount of erythropoietin that is required to produce equivalent ³[H]-thymidine incorporation into spleen cells from phenylhydrazine treated mice to that expressed of 1 unit of the WHO- erythropoietin reference standard (2^{nd} First International Reference Preparation).

In an embodiment, at least two, or at least three, or more, stem cell enhancer compounds selected from the group of erythropoietin, CD34-positive cells, and retinoic acid, are present in the composition of the invention. It was found by the present inventor that the presence of at least two stem cell enhancer compounds, preferably the presence of three stem cell enhancer compounds, selected from the group of: erythropoietin, CD34-positive cell, and retinoic acid, led to an increase in the efficiency of the composition, i.e. further enhanced the functional and physical integrity of the cells, tissues, and/or organs preserved, transported and/or stored in the composition of the invention.

In an embodiment, the composition of the invention may further comprise at least one degranulating agent. In a preferred embodiment, the degranulating agent is Compound 48/80. Degranulating agents, such as Compound 48/80, are known in the art and are commercially available. The composition of the invention may also comprise at least one inorganic salt, which may aid in optimizing the action of the degranulating agent. Inorganic salts are known in the art and are also commercially available. In an embodiment the inorganic salt is CaCl₂. It may be particularly advantageous to incorporate at least one degranulating agent such as Compound 48/80 and at least one inorganic salt such CaCl₂ if CD34-positive cells are present in the composition of the invention. It is known in the art that CD34-positive cells contain multiple granules within their cytoplasm. The degranulating agent (preferably in combination with an inorganic salt) is used to cut a CD34-positive cell into smaller pieces (i.e. degranulation), which ultimately leads to the release of growth factors into the composition of the invention. Following degranulation, residues from a CD34-positive cell may be optionally removed from the composition, for example by centrifugation. The resultant composition can then be used to preserve, transport and/or store living biological materials. Any degranulating agents and organic salts commercially available or home-made can be used for the preparation of the composition of the invention. However, Compound 48/80 in combination with CaCl₂ is preferred, since it was observed by the present inventor that such combination resulted in a more efficient degranulation of the CD34-positve cells.

In an embodiment, the at least one extracellular matrix compound of the composition of the invention is selected from the group of platelet rich plasma, laminin, collagen IV, heparin sulfate, entactin, and chondroitin sulfate. The term "extracellular matrix component" is a term well-known to those skilled person. Non-limiting examples of other extracellular matrix compounds are collagen, laminin, elastin, fibronectin, and the like, which are widely commercially available. Substitutes thereof are also known in the art and are commercially available. Methods and protocols to prepare extracellular matrix compounds are also known in the art. Any home-made or commercially available extracellular compounds can be used in the fertilization composition of the invention. In a preferred embodiment, the at least one extracellular matrix compound is platelet rich plasma. Any physiologically acceptable concentrations (ml/ml) of platelet rich plasma can be used in the present invention but a concentration in the range of about 0.0005-5 ml/ml, more preferably about 0.005-0.5 ml/ml, more preferably about 0.01-0.25 ml/ml, more preferably about 0.02-0.15 ml/ml, more preferably about 0.03-0.10 ml/ml, more preferably about 0.04-0.08 ml/ml, more preferably about 0.045-0.06 ml/ml, more preferably about 0.05 ml/ml of platelet rich plasma is preferred. In another embodiment, the platelet rich plasma is derived from the peripheral blood of a donor subject, preferably a human subject. Protocols and methods to obtain platelet rich plasma from the blood of a subject are known in the art. It was shown by the present inventor that the incorporation of a platelet rich plasma rendered the composition of the invention particularly effective, i.e. further improved the functional and physical integrity of the cells, tissues, and/or organs preserved, transported and/or stored in the composition of the invention.

In an embodiment, at least two, three, four, five, six, or more, extracellular matrix compounds selected from the group of platelet rich plasma, laminin, collagen IV, heparin sulfate, entactin, and chondroitin sulfate, are present in the composition of the invention. It was found by the present inventor that the incorporation of at least two, preferably three, preferably four, preferably five, more preferably six extracellular matrix compounds into the composition of the invention, led to a more effective composition, i.e. endowed with an enhanced ability to maintain functional and physical integrity of cells, tissues, and/or organs preserved, transported and/or stored in the composition, relative to composition wherein only one extracellular matrix compound is present.

In an embodiment, the composition of the invention comprises Bis (maltolato) oxovanadium; erythropoietin; at least one antioxidant compound selected from the group consisting of: quercetin, monohydroxyethyl rutoside, vitamin C, lipoic acid, deferoxamine mesylate, and vitamin E, preferably comprising at least mono-hydroxyethyl rutoside; and at least one extracellular matrix compound, preferably at least platelet rich plasma. Any physiologically acceptable concentrations of Bis (maltolato) oxovanadium, erythropoietin, mono-hydroxyethyl rutoside and platelet rich plasma can be used in the present invention. However it may be suitable to used about 0.01-100 mg of Bis (maltolato) oxovanadium/ml, preferably about 0.1-10 mg of Bis (maltolato) oxovanadium/ml, preferably about 0.5-8 mg of Bis (maltolato) oxovanadium/ml, preferably about 0.6-6 mg of Bis (maltolato) oxovanadium/ml, preferably about 0.7-3 mg of Bis (maltolato) oxovanadium/ml, preferably about 0.8-2 mg of Bis (maltolato) oxovanadium/ml, preferably about 0.9-1.5 mg of Bis (maltolato) oxovanadiu/ml, more preferably about 1 mg of Bis (maltolato) oxovanadium/ml, and an amount of about 0.1 unit to 10 units of erythropoietin/ml, preferably about 0.3 unit to 8 units of erythropoietin/ml, preferably about 0.5 unit to 6 units of erythropoietin/ml, about 0.7 unit to 4 units of erythropoietin/ml, about 0.9 unit to 2 units of erythropoietin/ml, about 0.95 unit to 1.5 units of erythropoietin/ml, more preferably about 1 unit of erythropoietin/ml, and about 0.0025-25 mg of mono-hydroxyethyl rutoside/ml, preferably about 0.025-2.5 mg of mono-hydroxyethyl rutoside/ml, preferably about 0.12-2 mg of mono-hydroxyethyl rutoside/ml, preferably about 0.15-1.5 mg of mono-hydroxyethyl rutoside/ml, preferably about 0.18-1 mg of mono-hydroxyethyl rutoside/ml, preferably about 0.2-0.5 mg of mono-hydroxyethyl rutoside/ml, preferably about 0.21-0.4 mg of mono-hydroxyethyl rutoside/ml, preferably about 0.23-0.3 mg of mono-hydroxyethyl rutoside/ml, preferably about 0.23-0.28 mg of mono-hydroxyethyl rutoside/ml, more preferably about 0.25 mg of mono-hydroxyethyl rutoside/ml, and 0.0005-5 ml of platelet rich plasma/ml, preferably about 0.005-0.5 ml of platelet rich plasma/ml, preferably about 0.01-0.25 ml of platelet rich plasma/ml, preferably about 0.02-0.15 ml of platelet rich plasma/ml, preferably about 0.03-0.10 ml of platelet rich plasma/ml, preferably about 0.04-0.08 ml of platelet rich plasma/ml, preferably about 0.045-0.06 ml of platelet rich plasma/ml, more preferably about 0.05 ml of platelet rich plasma/ml of platelet rich plasma.

In an embodiment, the composition of the invention is an isotonic solution. In an embodiment, said solution comprises about 0.8-1.0% weight/volume, such as about 0.85-0.95% weight/volume, such as about 90% weight/volume of sodium chloride. In further preferred embodiment, the solution has an osmolality of about 200-400 mOsm, such as about 250-350 mOsm, such as about 300 mOsm per one liter of solvent. In another embodiment, the solution has a molarity of about 120-190 mmol, such as about 130-180 mmol, or about 140-170 mmol, or about 150-160 mmol, such as about 154 mmol for sodium per one liter of solvent and about 120-190 mmol, such as about 130-180 mmol, or about 140-170 mmol, or about 150-160 mmol, such as about 154 mmol for chloride per one liter of solvent. In the present invention, the solvent is preferably water or an aqueous solution. In an embodiment, the solution has an osmolality substantially equal to that of the living biological material to be preserved. This is particularly advantageous to avoid cell damage, such as cells bursting out open due to an imbalance in osmolality between the internal milieu and external milieu (i.e. the composition of the invention) of said cell. Protocols and methods for preparing an isotonic solution are known in the art The isotonic solution is preferably sterile but this is not essential.

In an embodiment, the composition as taught herein does not comprise Foetal Bovine Serum (also known as Foetal Calf Serum) or any animal serum, including human serum unless the serum is autologous to the subject from which a living biological cells and/or tissue is to be preserved, transported and/or stored in the composition of the.invention.

In an embodiment, the composition as taught herein devoid of Foetal Bovine Serum (also known as Foetal Calf Serum) or any animal serum, including human serum unless the serum is autologous to the subject from which a living biological tissue is preserved, transported and/or stored in the composition of the.invention may be suitable for preserving, transporting and/or storing cells and tissues that are intended to be re-applied into or onto the human body.

In another embodiment, the composition of the invention further comprises one or more ingredients selected from the group of: albumin, essential and non-essential amino acids, vitamins, trace elements, organic constituents, inorganic salts, human serum albumin, insulin, growth supplements, and antibiotics. Non-limiting examples of inorganic salts include sodium chloride, potassium chloride, magnesium sulphate, sodium phosphate, calcium chloride, glucose sodium bicarbonate, sodium lactate, and sodium pyruvate. The addition of one or more of said ingredients may be particularly advantageous to further maintain the functional and physiological integrity of the living biological materials to be preserved, transported and/or stored in the composition of the invention while preventing contamination by pathogens or other contaminating agents. Elimination of pathogens and other contaminating agents is important in the context where cells, tissues and or organs preserved, transported and/or stored in the composition of the invention are intended as transplants or implants in a recipient subject. Globally, such action will prevent the occurrence of complications related to inflammation and/or immune rejections in said subject.

In an embodiment, the composition may be in a ready-to-use form or may be in a concentrated form, e.g., for dilution in water. The person with ordinary skills readily knows how to appropriately dilute a concentrated composition into water or other aqueous solvents. In a further embodiment, the composition of the invention is sterile. Methods and protocols for preparing a sterile composition are known in the art. It may be particularly advantageous to sterilize the composition of the invention in the context wherein the cells, tissues and or organs preserved, transported and/or stored in the composition of the invention are intended as transplants or implants in a recipient subject. Globally, such action will also prevent the occurrence of complications related to inflammation and/or immune rejections in said subject.

In an embodiment the living biological material is natural and/or bioengineered biological material. In another embodiment, the living natural and/or bioengineered biological material is selected from the group of: cell and tissue. Also disclosed is that the natural and/or bioengineered living cell is selected from the group of neural cell, eye cell such as retinal pigment epithelium cell, rod and cone, heart cell such as cardiomyocte and pacemaker cell, tooth cell such as odontoblast and other pulp cell, epithelial cell, keratinocyte cell, fibroblast cell, , fat cell, blood cell, immune cell, muscle cell, skin cell, hair follicular stem cell, hair follicular cell, non-embryonic stem cell, embryonic stem cell, bone cell such as osteoblast, osteocyte, osteoclast, and cartilage cell such as chondrocytes, and the like. Also disclosed is that the natural and/or bioengineered living tissue is selected from the group of neural tissue, eye tissue, heart tissue, tooth tissue, epithelial tissue, keratinocyte tissue, fibroblast tissue, connective tissue, fat tissue, muscle tissue, skin tissue, hair tissue, bone tissue, and cartilage tissue, and the like.

In an embodiment, the living biological material is a part of an organ, preferably a whole organ obtained from a donor subject. Also disclosed is that the living organ is selected from the group of brain, spinal cord, nerves, eye, heart, tooth, liver, kidney, pancreas, bladder, gall bladder, intestine, tendon, ligament, trachea, lung, stomach, esophagus, thyroid gland, pituitary gland, adrenal gland, ovary, placenta, umbilical cord, nose, tongue, ears, testis, thymus, lymph node, spleen, blood vessel, artery, vein, and bone marrow, and the like. In a further preferred embodiment, the natural and/or bioengineered biological material (i.e. cell, tissue and/or organ) to be preserved, transported and/or stored in the composition of the invention is of human origin.

In an embodiment, the temperature for the preservation, transportation and/or storage of living biological material including cells, tissues, and/or organs, is above freezing point, i.e., above 0°C. The temperature may be below about 40, 39, 38, or 37°C. The temperature for preservation, transportation and/or storage of living biological material including cell, tissue, and/or organ may, for example be in the range of about 2, 3, 4, or 5°C up to about 10, 15, 18, 22, 25, 30, 35, 37 or 40°C.

The living biological material may be stored in the composition of the invention for a period of time of up to about one year, 11 months, 10 months, 9 months, 8 months, 7 months, 6 months, 5 months, 4 months, 3 months, 2 months, 1 month, 3 weeks, 2 weeks, 1 week, 6 days, 5 days, 4 days, 3 days, 2 days, 1 day, 20 hours, 16 hours, 12 hours, 8 hours, 4 hours, 1 hour, less than 1 hour whilst the functional and physiological integrity (as indicated by the low level of cell death) of cells, tissues and/or organs is largely maintained.

In an embodiment, the composition of the invention is particularly suitable for use in implanting or transplanting living biological material in a recipient subject in need thereof for cosmetic purposes and/or for medical purposes, for instance regenerative medicine. In an embodiment of the invention, the living biological material to be implanted or transplanted into a subject may be allogeneic living biological material (i.e., originating from a non-genetically identical subject of the same species) or autologous living biological material (originating from the same subject). In an embodiment, in the case where autologous living biomaterial in transplanted or implanted in a subject, it is preferable that the composition of the invention comprises CD34-positive cells and/or platelet rich plasma originating from said subject. In a preferred embodiment, in the case where autologous living biomaterial in transplanted or implanted in a subject, it is preferable that the composition of the invention comprises erythropoietin and/or platelet rich plasma originating from said subject. It is particularly advantageous to incorporate autologous elements originating from the peripheral blood and/or bone marrow of said subject in the composition of the invention for the purpose of circumventing the occurrence of complications related to inflammation and/or immune rejection in said subject during the implantation or transplantation procedure.

### METHOD OF THE INVENTION FOR PRESERVING LIVING BIOLOGICAL MATERIAL

In a second aspect, the invention relates to an improved method for preserving keratinocyte cells and/or hair follicular cells comprising the steps of:
(a) providing a composition of the invention as taught herein;
(b) applying the composition of the invention to the keratinocyte cells and/or hair follicular cells, e.g., by immersing the keratinocyte cells and/or hair follicular cells in said composition;
(c) optionally, replenishing the composition, e.g., daily; and
(d) optionally, maintaining the keratinocyte cells and/or hair follicular cells of step (b) at a temperature in the range of above freezing point (0°C), such as above 2°C, 4°C, 6°C, and below about 40°C, such as below 39°C, 38°C, 37°C, 30°C, 25°C, 20°C, 15°C, or 10°C.

The keratinocyte cells and/or hair follicular cells to be preserved, and/or stored may be covered by the composition of the invention so that at least a thin layer of the composition may be observed over said keratinocyte cells and/or hair follicular cells. For example, if the composition of the present invention is in the form of a gel, a semi-liquid, or a paste, it may be applied onto the keratinocyte cells and/or hair follicular cells. Alternatively, if the composition of the invention is in the form of a liquid, the keratinocyte cells and/or hair follicular cells may be immersed in said liquid composition.

It was found that replenishing the composition on a regular basis, for example, on a daily basis, increased the efficiency of the composition, particularly in maintaining the functional and physiological integrity (as indicated by the low level of cell death) of the biological material to be preserved, transported and/or stored.

### BRIEF DESCRIPTION OF THE FIGURES RELATED TO THE INVENTION

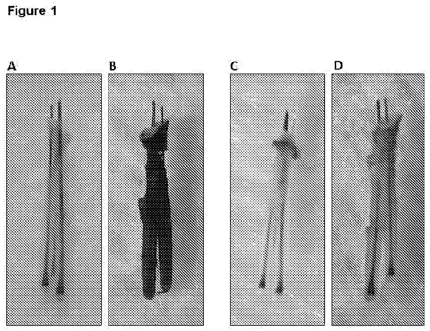

**Figure 1** displays photographs of hair follicles preserved in the composition of the invention for 4 hours (panel D) relative to hair follicles preserved in a saline solution for 4 hours (panel B). The results show that the level of cell death, as assessed by using the trypan blue staining assay, is significantly reduced in hair follicles preserved in the composition of the invention after 4 hours (panel D) as compared to hair follicles preserved in a saline solution for the same period of time (panel B). Panels A and C show the hair follicles in saline solution and composition of the invention, respectively, at 0 hour of preservation.

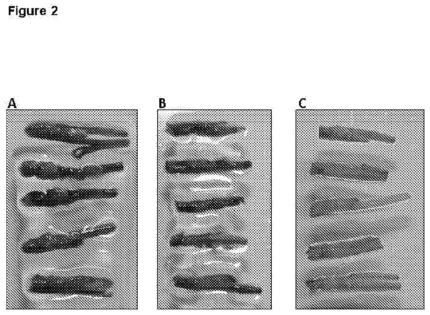

**Figure 2** displays photographs of skin tissue preserved in the composition of the invention (panel C) relative to skin tissue preserved in a saline solution (panel A) or a Ringer's lactate solution (panel B). The results show that the level of cell death, as assessed by using a trypan blue staining assay, is significantly reduced in skin tissue preserved in the composition of the invention after 4 hours (panel C) compared to skin tissue preserved in either a saline solution (panel A) or a Ringer's lactate solution (panel B).

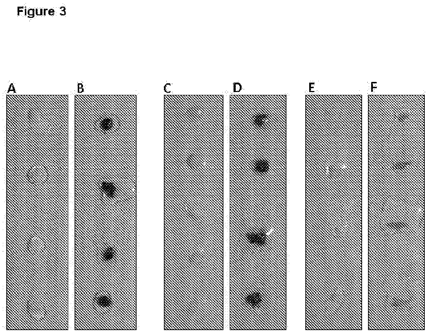

**Figure 3** displays photographs of fat tissue preserved for 4 hours in the composition of the invention (panel F) relative to fat tissue preserved for 4 hours in a saline solution (panel B) or a Ringer's lactate solution (panel D). The results show that the level of cell death, as assessed by using the trypan blue staining assay, is significantly reduced in fat tissue preserved in the composition of the invention after 4 hours (panel F) compared to fat tissue preserved in either a saline solution (panel B) or a Ringer's lactate solution (panel D). Panels A, C, and E show the fat tissue in saline solution, Ringer's lactate solution, and composition of the invention, respectively, at 0 hour of preservation.

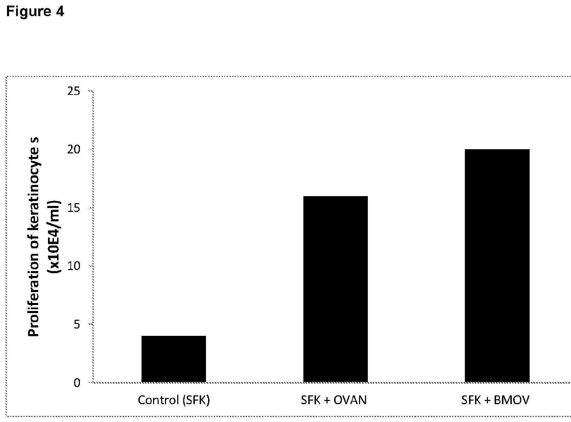

**Figure 4** displays the effect of the physiologically acceptable vanadium compounds oxovanadium (OVAN) and bis(maltolato) oxovanadium (BMOV) on proliferation of keratinocytes. Proliferation of keratinocytes is expressed as the number of cells counted per amount of the culture milieu (i.e. number of cells x10E4/ml). The results reveal an enhanced proliferation of keratinocytes following treatment with a composition comprising a basic medium growth serum (SFK) supplemented with 1 mg/ml of OVAN or 1 mg/ml of BMOV relative to the control situation (i.e. basic growth medium (SFK) lacking a vanadium compound). Note that treatment with BMOV is associated with a greater number of proliferated cells relative to treatment with OVAN.

### EXAM PLES

### Example 1. Preparation of the composition

The composition for preserving, transporting and/or storing biological material was freshly prepared by adding the following ingredients to a sterile Serum Free Growth Medium (Defined Serum Free (Keratinocyte) Growth Medium, purchased from Gibco, USA):
- 1mg/ml of bis(maltolato)oxovanadium (BMOV)
- 0.25 mg/ml of mono Hydroxy-Ethyl Rutoside (mono-HER)
- 0.25 mg/ml of D-tocopherol acid succinate /a-tocopherol (vitamin E)
- 0.1 mg/ml of lipoic acid
- 0.1 µmol/ml of adenosine triphosphate-magnesium chloride
- 15 mg/ml of deferoxamine mesylate
- 1 x 10³ cells/ml of CD34-positive cells
- 0.05 ml/ml of platelet rich plasma
- 1 unit/ml of erythropoietin

### Example 2. Preservation of hair tissue

Method: Hair tissue was immersed in the composition of the invention for a period of 4 hours at room temperature (around 21°C). In parallel, hair tissue was immersed in a traditional composition consisting of a physiologically acceptable saline solution, at the same temperature, for the same duration of time. The level of cell death was assessed using a trypan blue staining assay. Briefly, 25 hair micro grafts were immersed in a 0.1% trypan blue solution for 15 minutes, and then rinsed. Dead cells stained blue and were observed and counted under a microscope. Levels of cells dead was compared between hair tissue preserved in the composition of the invention and hair tissue preserved in the traditional composition.

Results: The results show that the level of cell dead was significantly reduced in the hair tissue preserved in the composition of the invention relative to the level of cell death observed in the hair tissue preserved in the saline solution (Figure 1). Overall, these results show that the composition of the present invention is particularly effective at maintaining the functional and physiological integrity of hair tissue preserved, transported and/or stored in the composition of the invention relative to what is achievable with a traditional n composition (e.g. physiologically acceptable saline solution).

### Example 3. Preservation of skin tissue

Method: Skin tissue was immersed in the composition of the invention for a period of 4 hours at room temperature (around 21°C). In parallel, skin tissue was immersed in either a physiologically acceptable saline solution or a Ringer's lactate solution, at the same temperature, for the same duration of time. The level of cell death was assessed using a trypan blue staining assay. Briefly, 25 skin micro grafts were immersed in a 0.1% trypan blue solution for 15 minutes, and then rinsed. Dead cells stained blue and were observed and counted under a microscope. Level of cells dead was compared between skin tissue preserved in the composition of the invention and skin tissue preserved in the traditional compositions (i.e., physiologically acceptable saline solution and Ringer's lactate solution).

Results: The results show that the level of cell dead was significantly reduced in the skin tissue preserved in the composition of the invention relative to the level of cell death observed in the skin tissue preserved in the traditional solutions (e.g., physiologically acceptable saline solution and Ringer's lactate solution) (see Figure 2). Overall, these results show that the composition of the invention is particularly effective at maintaining the functional and physiological integrity of skin tissue preserved, transported and/or stored in the composition of the invention relative to what is achievable with traditional compositions (e.g. physiologically acceptable saline solution or Ringer's lactate solution).

### Example 4. Preservation of fat tissue

Method: Fat tissue was immersed in the composition of the invention for a period of 4 hours at room temperature (around 21°C). In parallel, fat tissue was immersed in either a physiologically acceptable saline solution or a Ringer's lactate solution at the same temperature and for the same duration of time. The level of cell death was assessed using a trypan blue staining assay. Briefly, 25 fat micro grafts were immersed in a 0.1% trypan blue solution for 15 minutes, and then rinsed. Dead cells stained blue and were observed and counted under a microscope. Levels of cells dead was compared between fat tissue preserved in the composition of the invention and fat tissue preserved in the traditional compositions (i.e. physiologically acceptable saline solution and Ringer's lactate solution) (see Figure 3).

Results: The results show that the level of cell dead was significantly reduced in the fat tissue preserved in the composition of the invention relative to the level of cell death observed in the fat tissue preserved in the traditional solutions (e.g., physiologically acceptable saline solution and Ringer's lactate solution). Overall, these results show that the composition of the invention is particularly effective at maintaining the functional and physiological integrity of fat tissue preserved, transported and/or stored in the composition of the invention relative to what is achievable with compositions (e.g. physiologically acceptable saline solution or Ringer's lactate solution).

### Example 5: Effect of vanadium compounds on proliferation of keratinocytes.

**Method:** The hair follicles were transferred to a 24-well culture disk containing dSFK with 500 mg/ml penicillin (Life Technologies B.V. Breda, The Netherlands) and 0.25 µg/ml streptomycin (Life Technologies B.V. Breda, The Netherlands), and placed for 14 days in a culture medium at 31°C in a humidified atmosphere containing 5% CO2. Three different culture medium were used:
- Treatment group oxovanadium (OVAN): The culture medium is a composition comprising a basic SFK growth serum (purchased from the supplier SFK, Enschede The Netherlands) supplemented with either 1 mg/ml of OVAN.
- Treatment group bis (maltolato) oxovanadium (BMOV): The culture medium is a composition comprising a basic SFK growth serum (purchased from the supplier SFK, Enschede The Netherlands) supplemented with either 1 mg/ml of BMOV.
- Control group: The control situation consists of a composition comprising the SFK basic growth serum but without the vanadium compounds (i.e. OVAN or BMOV).

The respective culture media were carefully removed every three days and replaced by fresh culture media. The cells remained attached to the hair follicles during this culture period. After 14 days the culture medium was removed and replaced by a 0.5 mg/ml trypsin, 0.2 mg/ml EDTA (ethylene diaminetetraacetic acid) solution (Life Technologies B.V. Breda, The Netherlands), and incubated for 5 minutes at 37°C in this medium. After this incubation period clusters of cells were released from the hair follicles. These were harvested by centrifugation at 300 g at 4°C for 5 minutes in a Eppendorf 5804R Centrifuge (VWR International, The Netherlands). Number of cells were counted and expressed as amount of proliferated cells per ml of culture medium.

**Results:** The results show that the amount of proliferated keratinocytes was significantly increased following treatment with both vanadium compounds, i.e. OVAN and BMOV relative to the control situation. The results further show that BMOV appears to be more potent than OVAN. Overall, these results show that vanadium compounds are particularly effective at promoting cell proliferation as well as cell survival under culture condition (see Figure 4).

## Claims

1. A composition for the preservation, transportation and/or storage of living biological material, which comprises at least one anti-apoptotic compound, wherein said anti-apoptotic agent is a physiologically acceptable vanadium compound, at least one anti-oxidant compound, at least one stem cell enhancer compound, selected from the group consisting of erythropoietin, CD34-positive cells and retinoic acid, and at least one extracellular matrix compound.

2. Composition according to claim 1, wherein the physiologically acceptable vanadium compound is selected from the group consisting of bis (maltolato) oxovanadium, oxovanadium, and orthovanadium.

3. Composition according to claim 1 or 2, wherein the physiologically acceptable vanadium compound is bis (maltolato) oxovanadium.

4. Composition according to any one of claims 1-3 further comprising a second or further anti-apoptotic compounds selected from the group consisting of a triiodothyronine, estradiol, progesterone, tissue extract, insulin, transferrin, selenium, L-cysteine, adenosine triphosphate-magnesium chloride, and L-leucine.

5. A composition according to any one of the preceding claims, wherein the anti-oxidant compound is selected from the group consisting of quercetin, monohydroxyethyl rutoside, vitamin C, lipoic acid, deferoxamine mesylate, and vitamin E.

6. Composition according to any one of the preceding claims, wherein the stem cell enhancer compound is selected from the group of erythropoietin and CD34-positive cell.

7. A composition according to claim 6, wherein the CD34-positive cell and/or erythropoietin is derived from the peripheral blood or bone marrow of a subject.

8. A composition according to any one of claims 6-7, wherein the CD34-positive cell is obtained from a human CD34-positive cell line.

9. A composition according to any one of the preceding claims wherein the extracellular matrix compound is selected from the group consisting of platelet rich plasma, laminin, collagen IV, heparin sulfate, entactin, and chondroitin sulfate.

10. Use of a composition according to any one of claims 1-9 for preserving, transporting and/or storing keratinocyte cells and/or hair follicular cells.

11. In vitro method for preserving, transporting, and/or storing keratinocyte cells and/or hair follicular cells, comprising the steps of:
(a) providing a composition according to any one of claims 1-9 and
(b) applying the composition to the keratinocyte cells and/or hair follicular cells.

12. In vitro method according to claim 11, wherein the keratinocyte cells and/or hair follicular cells of step (b) are maintained at a temperature in the range of above 0°C and below 40°C.

13. In vitro method according to any one of claims 11 or 12 wherein the composition is replenished daily.

14. In vitro method according to any one of claims 11-13, wherein the keratinocyte cells and/or hair follicular cells of step (b) are maintained at a temperature of below 25°C.

## Patentansprüche

1. Zusammensetzung für die Konservierung, den Transport und/oder die Lagerung eines lebenden biologischen Materials, die mindestens eine anti-apoptotische Verbindung, wobei die anti-apoptotische Verbindung eine physiologisch annehmbare Vanadiumverbindung ist, mindestens eine Antioxidansverbindung, mindestens eine als Enhancer von Stammzellen wirksame Verbindung, gewählt aus der Gruppe, bestehend aus Erythropoietin, CD34-positiven Zellen und Retinsäure, und mindestens eine extrazelluläre Matrixverbindung umfasst.

2. Zusammensetzung nach Anspruch 1, wobei die physiologisch annehmbare Vanadiumverbindung gewählt ist aus der Gruppe, bestehend aus Bis(maltolato)-oxovanadium, Oxovanadium und Orthovanadium.

3. Zusammensetzung nach Anspruch 1 oder 2, wobei die physiologisch annehmbare Vanadiumverbindung Bis(maltolato)oxovanadium ist.

4. Zusammensetzung nach einem der Ansprüche 1-3, weiterhin umfassend eine zweite oder weitere anti-apoptotische Verbindungen, gewählt aus der Gruppe, bestehend aus Triiodthyronin, Estradiol, Progesteron, Gewebeextrakt, Insulin, Transferrin, Selen, L-Cystein, Adenosintriphosphat-Magnesiumchlorid und L-Leucin.

5. Zusammensetzung nach einem der vorhergehenden Ansprüche, wobei die Antioxidansverbindung gewählt ist aus der Gruppe, bestehend aus Quercetin, Monohydroxyethylrutosid, Vitamin C, Liponsäure, Deferoxamin-Mesylat und Vitamin E.

6. Zusammensetzung nach einem der vorhergehenden Ansprüche, wobei die als Enhancer von Stammzellen wirksame Verbindung gewählt ist aus der Gruppe, bestehend aus Erythropoietin und einer CD34-positiven Zelle.

7. Zusammensetzung nach Anspruch 6, wobei die CD34-positive Zelle und/oder das Erythropoietin aus dem peripheren Blut oder dem Knochenmark eines Individuums stammen.

8. Zusammensetzung nach einem der Ansprüche 6-7, wobei die CD34-positive Zelle von einer menschlichen CD34-positiven Zelllinie abstammt.

9. Zusammensetzung nach einem der vorhergehenden Ansprüche, wobei die extrazelluläre Matrixverbindung gewählt ist aus der Gruppe, bestehend aus mit Thrombocyten angereichertem Plasma, Laminin, Kollagen IV, Heparinsulfat, Entactin und Chondroitinsulfat.

10. Verwendung einer Zusammensetzung nach einem der Ansprüche 1-9 zum Konservieren, Transportieren und/oder Lagern von Keratinocytenzellen und/oder Haarfollikelzellen.

11. In-vitro-Verfahren zum Konservieren, Transportieren und/oder Lagern von Keratinocytenzellen und/oder Haarfollikelzellen, umfassend die folgenden Schritte:
(a) das Bereitstellen einer Zusammensetzung nach einem der Ansprüche 1-9, und
(b) das Applizieren der Zusammensetzung auf die Keratinocytenzellen und/oder Haarfollikelzellen.

12. In-vitro-Verfahren nach Anspruch 11, wobei die Keratinocytenzellen und/oder Haarfollikelzellen in Schritt (b) bei einer Temperatur im Bereich oberhalb von 0°C und unterhalb von 40°C gehalten werden.

13. In-vitro-Verfahren nach einem der Ansprüche 11 oder 12, wobei die Zusammensetzung jeden Tag aufgefüllt wird.

14. In-vitro-Verfahren nach einem der Ansprüche 11-13, wobei die Keratinocytenzellen und/oder Haarfollikelzellen in Schritt (b) bei einer Temperatur unterhalb von 25°C gehalten werden.

## Revendications

1. Composition pour la conservation, le transport et/ou le stockage de matières biologiques vivantes, qui comprend au moins un composé anti-apoptotique, où ledit agent anti-apoptotique est un composé de vanadium physiologiquement acceptable, au moins un composé antioxydant, au moins un composé stimulant les cellules souches, sélectionné dans le groupe consistant en l'érythropoïétine, des cellules positives pour CD34 et l'acide rétinoïque, et au moins un composé de la matrice extracellulaire.

2. Composition selon la revendication 1, dans laquelle le composé de vanadium physiologiquement acceptable est sélectionné dans le groupe consistant en le bis(maltolato)oxovanadium, l'oxovanadium, et l'orthovanadium.

3. Composition selon la revendication 1 ou 2, dans laquelle le composé de vanadium physiologiquement acceptable est le bis(maltolato)oxovanadium.

4. Composition selon l'une quelconque des revendications 1 à 3, comprenant en outre un second ou des composés anti-apoptotiques supplémentaires sélectionnés dans le groupe consistant en la triiodothyronine, l'oestradiol, la progestérone, un extrait tissulaire, l'insuline, la transferrine, le sélénium, la L-cystéine, l'adénosine triphosphate-chlorure de magnésium, et la L-leucine.

5. Composition selon l'une quelconque des revendications précédentes, dans laquelle le composé antioxydant est sélectionné dans le groupe consistant en la quercétine, le monohydroxyéthylrutoside, la vitamine C, l'acide lipoïque, le mésylate de déféroxamine, et la vitamine E.

6. Composition selon l'une quelconque des revendications précédentes, dans laquelle le composé stimulant les cellules souches est sélectionné dans le groupe de l'érythropoïétine et une cellule positive pour CD34.

7. Composition selon la revendication 6, dans laquelle la cellule positive pour CD34 et/ou l'érythropoïétine est dérivée du sang périphérique ou de la moelle osseuse d'un sujet.

8. Composition selon l'une quelconque des revendications 6 à 7, dans laquelle la cellule positive pour CD34 est obtenue à partir d'une lignée cellulaire humaine positive pour CD34.

9. Composition selon l'une quelconque des revendications précédentes, dans laquelle le composé de la matrice extracellulaire est sélectionné dans le groupe consistant en du plasma riche en plaquettes, la laminine, le collagène IV, le sulfate d'héparane, l'entactine, et le sulfate de chondroïtine.

10. Utilisation d'une composition selon l'une quelconque des revendications 1 à 9 pour conserver, transporter et/ou stocker des kératinocytes et/ou des cellules des follicules pileux.

11. Procédé *in vitro* pour conserver, transporter et/ou stocker des kératinocytes et/ou des cellules des follicules pileux, comprenant les étapes consistant à :
(a) mettre à disposition une composition selon l'une quelconque des revendications 1-9 et
(b) appliquer la composition aux kératinocytes et/ou cellules des follicules pileux.

12. Procédé *in vitro* selon la revendication 11, dans lequel les kératinocytes et/ou cellules des follicules pileux de l'étape (b) sont maintenu(e)s à une température comprise dans la plage supérieure à 0 °C et inférieure à 40 °C.

13. Procédé *in vitro* selon l'une quelconque des revendications 11 ou 12, dans lequel la composition est renouvelée quotidiennement.

14. Procédé *in vitro* selon l'une quelconque des revendications 11 à 13, dans lequel les kératinocytes et/ou cellules des follicules pileux de l'étape (b) sont maintenu(e)s à une température inférieure à 25 °C.
